(19) **Europäisches Patentamt**
**European Patent Office**
**Office européen des brevets**

(11) **EP 2 455 830 A1**

(12) **EUROPÄISCHE PATENTANMELDUNG**

(43) Veröffentlichungstag:
**23.05.2012 Patentblatt 2012/21**

(51) Int Cl.:
**G05B 19/042** (2006.01)      **G05B 19/05** (2006.01)

(21) Anmeldenummer: **10192213.6**

(22) Anmeldetag: **23.11.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder:
• **Röhle, Holger**
**09235, Burkhardtsdorf (DE)**
• **Simon, Matthias**
**09557, Flöha (DE)**

(54) **Verfahren zur Erfassung von Eingangssignaländerungen**

(57)    Verfahren zur Erfassung von Eingangssignaländerungen an einem Eingang (3) einer Ein-/Ausgabebaugruppe (2), welche in einem Automatisierungssystem (1) betrieben wird, dabei wird
- über die Ein-/Ausgabebaugruppe (2) ein Signal (4) abgetastet, wobei bei einer Signaländerung ein Änderungsereignis () und ein zu diesem Änderungsereignis (5) zugehöriger Zeitstempel (6) erzeugt wird, und
- das Wertepaar Änderungsereignis (5) und Zeitstempel (6) in einer der Ein-/Ausgabebaugruppe (2) übergeordneten Automatisierungskomponente abgelegt wird,

wobei die Ein-/Ausgabebaugruppe (2) und die übergeordnete Automatisierungskomponente taktsynchron mit einem Takt (T) zueinander betrieben werden, wobei der Zeitstempel (6) auf Grund des taktsynchronen Betriebes auf der übergeordneten Automatisierungskomponente zentral berechnet wird.

## FIG 1

EP 2 455 830 A1

**EP 2 455 830 A1**

**Beschreibung**

Die Erfindung betrifft ein Verfahren zur Erfassung von Eingangssignaländerungen an einem Eingang einer Ein-/Ausgabebaugruppe, welche in einem Automatisierungssystem betrieben wird, dabei wird über die Ein-/Ausgabebaugruppe ein Signal abgetastet, wobei bei einer Signaländerung ein Änderungsereignis und ein zu diesem Änderungsereignis zugehöriger Zeitstempel erzeugt wird, und das Wertepaar Änderungsereignis und Zeitstempel in einer der Ein-/Ausgabebaugruppe übergeordneten Automatisierungskomponente abgelegt wird.

In Automatisierungssystemen, insbesondere in dezentralen Stationen mit Feldbus-/PROFIBUS-DP oder PROFINET, sind vorzugsweise über ein Schnittstellenmodul Ein-/Ausgabebaugruppen angeschlossen. Über diese Ein-/Ausgabebaugruppen werden Signaländerungen von einer digitalen oder analogen Peripherie analysiert, erfasst und mit einer Uhrzeit versehen. Die Uhrzeit ist als ein sogenannter Zeitstempel ausgelegt. Eine Anwendung des Zeitstempelns von Signaländerungen ist insbesondere wichtig, um im Nachhinein eine zeitliche Reihenfolge analysieren zu können (SOE = Sequenz of Events). Ein Beispiel für eine solche Eingangssignaländerung ist eine Änderung eines binären Eingangssignals oder auch eine Zustandsänderung oder dergleichen. Im Sinne der Erfindung ist unter Eingangssignaländerung auch eine Grenzwertüberschreitung eines analogen Signals zu verstehen.

Aus der DE 10 2006 010 748 A1 ist bereits ein Verfahren zum Aufzeichnen von Eingangssignaländerungen bekannt. Andererseits ist es bekannt in Automatisierungsgeräten mit einer dezentralen Peripherie, welche an das Schnittstellenmodul angeschlossen ist, eine Funktion zu implementieren, die eine Signaländerung von beispielsweise einer Digitalperipherie analysiert und entsprechend mit einem Zeitstempel versieht. Der im Zeitstempel niedergelegte Zeitpunkt ist damit aber die Uhrzeit der Uhr im Schnittstellenmodul im Moment des Transfers der Nutzdaten von der Peripheriebaugruppe, vorzugsweise der Ein-/Ausgabebaugruppe, und differiert dadurch zum Zeitpunkt der wirklichen Erfassung des Signals auf der Peripheriebaugruppe bzw. Ein-/Ausgabebaugruppe. Bei dem in DE 10 2006 010 748 A1 beschriebenen Verfahren ist es von Nachteil, dass zur Erfassung der Eingangssignaländerung auf den Ein-/Ausgabebaugruppen jede Ein-/Ausgabebaugruppe eine Implementierung bzw. eine Hardware für eine hochgenaue Uhr benötigt. Andererseits ist es bei den bekannten Verfahren mit der dezentralen Peripherie von Nachteil, dass die Ermittlung des Zeitstempels nicht genau genug ist.

Es ist daher die Aufgabe der Erfindung ein Verfahren zur Erfassung von Eingangssignaländerungen bereitzustellen, bei welchem zum Einen auf zusätzliche, kostenintensive Hardware verzichtet werden kann und zum Anderen die Genauigkeit der Eingangssignaländerung bezüglich des Zeitstempels erhöht wird.

Die Aufgabe wird bei dem eingangs genannten Verfahren dadurch gelöst, dass die Ein-/Ausgabebaugruppe und die übergeordnete Automatisierungskomponente taktsynchron mit einem Takt zueinander betrieben werden, wobei der Zeitstempel aufgrund des taktsynchronen Betriebes, auf der übergeordneten Automatisierungskomponente zentral berechnet wird. Unter Nutzung der taktsynchronen Bearbeitung von Eingaben und Ausgaben ist es möglich, mittels dieser synchronisierten Abläufe die Genauigkeit für die Erfassung von Peripheriesignaländerungen zu erhöhen. Statt einer Uhrzeitsynchronisation auf jeder einzelnen Ein-/Ausgabebaugruppe wird für das Automatisierungssystem eine taktsynchrone Datenübertragung gewählt. Bei diesem Verfahren laufen alle Zyklen im System zueinander synchronisiert und äquidistant auf, vorzugsweise dauert dabei jede Datenübertragung gleich lang. Damit ist es möglich, den Zeitpunkt zu bestimmen, zu dem sich ein Wert auf der Ein-/Ausgabebaugruppe geändert hat. Eine übergeordnete Automatisierungskomponente kann die geänderten Daten selbst stempeln, da es den Zeitpunkt der Änderung berechnen kann.

Vorzugsweise ergibt eine Addition einer Momentanzeit zum Zeitpunkt des Taktes und eines Vielfachen eines Abtastintervalls in der Ein-/Ausgabebaugruppe den Zeitstempel.

Dabei wird in der Ein-/Ausgabebaugruppe das Signal mit einer Häufigkeit abgetastet, wobei sich die Häufigkeit aus der Division des Taktintervalls durch das Abtastintervall ergibt. Unter Taktintervall ist der zeitliche Abstand zwischen zwei Synchronisationstakten zu verstehen.

In einer ersten Ausgestaltungsvariante des Verfahrens wird eine Anzahl, welche der Häufigkeit entspricht, an abgetasteten Werten in der Ein-/Ausgabebaugruppe zwischengespeichert und zur übergeordneten Automatisierungskomponente übertragen, wobei in der übergeordneten Automatisierungskomponente anhand der Reihe von Werten geprüft wird, bei welchem Wert eine Signaländerung eingetreten ist, wobei die Position des Wertes innerhalb der Reihe das Vielfache für die Berechnung des Zeitstempels ergibt.

In einer zweiten Ausgestaltungsvariante des Verfahrens wird eine Anzahl, welche der Häufigkeit entspricht, an abgetasteten Werten in der Ein-/Ausgabebaugruppe zwischengespeichert und in der Ein-/Ausgabebaugruppe anhand der Reihe von Werten geprüft, bei welchem Wert eine Signaländerung eingetreten ist, wobei die Position des Wertes innerhalb der Reihe das Vielfache für die Berechnung des Zeitstempels ergibt und dieses an die übergeordnete Automatisierungskomponente übertragen wird.

In einer dritten Ausgestaltungsvariante wird in der Ein-/Ausgabebaugruppe ein Flankendetektor betrieben, welcher erkennt, wann eine Signaländerung stattfindet und für jeden abgetasteten Wert in der Ein-/Ausgabebaugruppe ein Zähler hochgezählt wird, wobei bei Erkennen einer Flanke durch den Flankendetektor ein Zählerstand des Zählers das Vielfache für die Berechnung des Zeitstempels ergibt und dieses an die übergeordnete Automatisierungskomponente

2

übertragen wird.

Zur weiteren Optimierung der Genauigkeit wird die Flankendetektion in der Ein-/Ausgabebaugruppe analog durchgeführt, wodurch das Abtastintervall kleiner gewählt wird und die Genauigkeit der Zeitstempelberechnung verbessert. Der Flankendetektor ist dabei mit diskreten Bauelementen aufgebaut.

Für alle vorgenannten Ausführungsvarianten wird in der übergeordneten Automatisierungskomponente eine Uhr betrieben, welche die Momentanzeit bereitstellt, dabei wird diese Uhr mit anderen Automatisierungskomponenten in dem Automatisierungssystem synchronisiert.

Vorteilhaft ist es, wenn die übergeordnete Automatisierungskomponente als ein Schnittstellenmodul betrieben wird und die Ein-/Ausgabebaugruppe über einen Peripheriebus die erfassten Werte an das Schnittstellenmodul sendet, wobei das Schnittstellenmodul wiederum an einem Feldbus betrieben wird, welcher an einem Automatisierungsgerät angeschlossen wird.

In der Zeichnung werden weitere Ausgestaltungsmerkmale und Vorteile erläutert. Es zeigen:

FIG 1     eine Ein-/Ausgabebaugruppe in einem Automatisierungssystemverbund und

FIG 2     ein Ablaufdiagramm mit drei unterschiedlichen Varianten zur Erfassung einer Eingangssignaländerung.

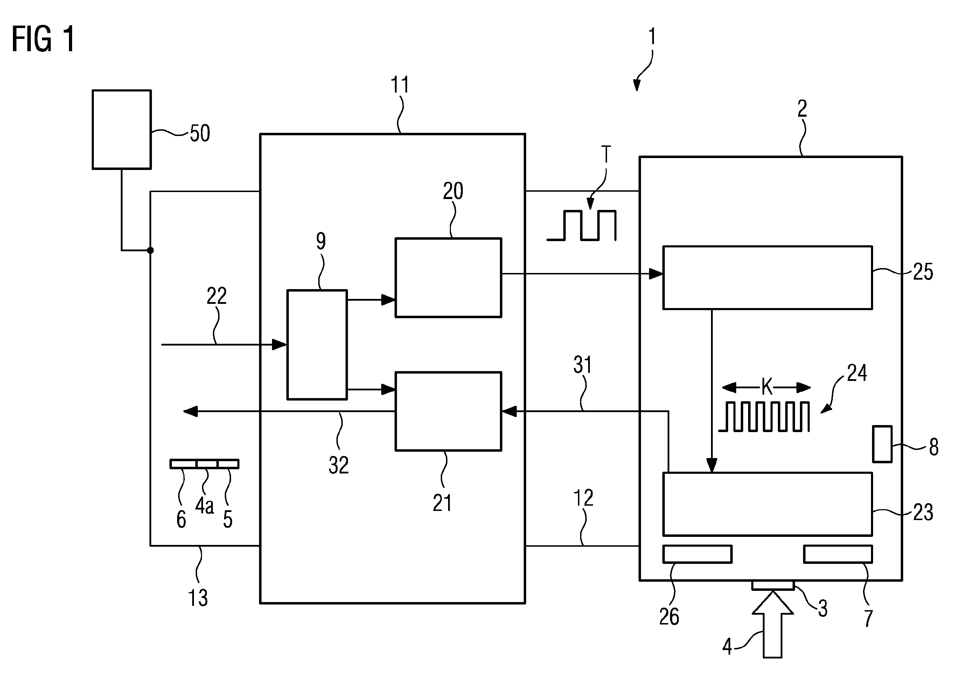

Gemäß FIG 1 ist ein Automatisierungssystem 1 umfassend ein Automatisierungsgerät 50, ein Feldbus 13, ein Schnittstellenmodul 11, einen Peripheriebus 12 und eine Ein-/Ausgabebaugruppe 2 mit einem Eingang 3 für Signale 4 dargestellt. Ein solches Automatisierungssystem 1 kann ein programmierbares Leitsystem, eine speicherprogrammierbare Steuerung mit einer über einen Feldbus 13 angeschlossenen dezentralen Peripherie oder auch ein Personal Computer, insbesondere zur Prozessautomatisierung, sein.

Über den Eingang 3 der Ein-/Ausgabebaugruppe 2 ist beispielsweise ein Sensor, welcher in einen industriellen Prozess hineinführt, angeschlossen. Damit später in dem Automatisierungsgerät 50 oder in einem wiederum übergeordneten Leitsystem genau festgestellt werden kann zu welchem Zeitpunkt sich das Signal des Sensors, beispielsweise von "0" auf "1", also von "AUS" auf "EIN" oder "Tür zu" "Tür auf", geändert hat, wird ein Verfahren zur Erfassung von Eingangssignaländerungen an dem Eingang 3 der Ein-/Ausgabebaugruppe 2 angewendet. Dabei wird in der Ein-/Ausgabebaugruppe 2 mittels eines Erfassungsmittels 23 das Signal 4 über den Eingang 3 abgetastet, die Abtastung in dem Erfassungsmittel 23 wird durch ein dem Fachmann bekanntes Oversamplingverfahren durchgeführt. Dies bedeutet, dass innerhalb der Ein-/Ausgabebaugruppe eine Überabtastung des Signals 4 bezogen auf einen in dem Automatisierungssystem 1 vorherrschenden synchronen Takt T. Ein Taktuntersetzer 25 ist dabei dazu ausgestaltet, den synchronen Takt T zu empfangen und aus dem synchronen Takt T durch Untersetzung einen untersetzten Takt 24 zu erzeugen. Beispielsweise hat der Takt T ein Taktintervall von 100 $\mu$s und damit hat der untersetzte Takt T ein Abtastintervall I von 10 $\mu$s.

Um die Taktsynchronität für den Takt T in dem Automatisierungssystem 1 herzustellen, werden an alle Automatisierungskomponenten in dem Automatisierungssystem 1 Uhrzeitsynchronisationstelegramme 22 verschickt. Das Uhrzeitsynchronisationstelegramm 22, welches über den Feldbus 13 zum Schnittstellenmodul 11 gelangt, wird von einer Uhr 9 entgegengenommen. Diese Uhr 9 gilt als eine über den Feldbus 13 synchronisierte hochgenaue Uhr. Die synchronisierte Uhrzeit in der Uhr 9 wird in dem Schnittstellenmodul 11 dazu genutzt, einen Taktgenerator 20 anzusteuern, welcher den Takt T erzeugt. Über den Peripheriebus 12 ist der Taktgenerator 20 mit dem Taktuntersetzer 25 der Ein-/Ausgabebaugruppe 2 verbunden.

Wird eine Eingangssignaländerung des Signals 4 erkannt, so wird ein Änderungsereignis 5 über den Peripheriebus 12 an das Schnittstellenmodul 11 übertragen. Durch diese Übertragung gelangt das Änderungsereignis zu einem Mittel 21 zur Zeitstempelung. Da die Ein-/Ausgabebaugruppe 2 und das Schnittstellenmodul 11 taktsynchron zueinander betrieben werden, kann der Zeitstempel 6 aufgrund des taktsynchronen Betriebes auf dem Schnittstellenmodul 11 zentral berechnet werden. Für diese Berechnung wird eine Häufigkeit K, mit welcher abgetastet wird, benutzt. Die Häufigkeit K ergibt sich dabei aus der Division des Taktintervalles durch das Abtastintervall I.

In einer ersten Variante wird in der Ein-/Ausgabebaugruppe 2 eine Anzahl, welche der Häufigkeit K entspricht, an abgetasteten Werten in der Ein-/Ausgabebaugruppe 2 zwischengespeichert und über den Peripheriebus 12 zum Schnittstellenmodul 11 übertragen. Dabei ist das Mittel 21 zur Zeitstempelung in dem Schnittstellenmodul 11 derart ausgestaltet, dass anhand der Reihe von Werten geprüft wird, bei welchem Wert eine Signaländerung eingetreten ist, wobei die Position des Wertes innerhalb der Reihe das Vielfache für die Berechnung des Zeitstempels ergibt. Weiterhin wird in dem Mittel 21 zur Zeitstempelung ein Telegramm erzeugt, welches den Zeitstempel 6 den aktuellen Wert des Signals 4a und das Änderungsereignis enthält, dieses Telegramm kann über den Feldbus 13 versendet werden.

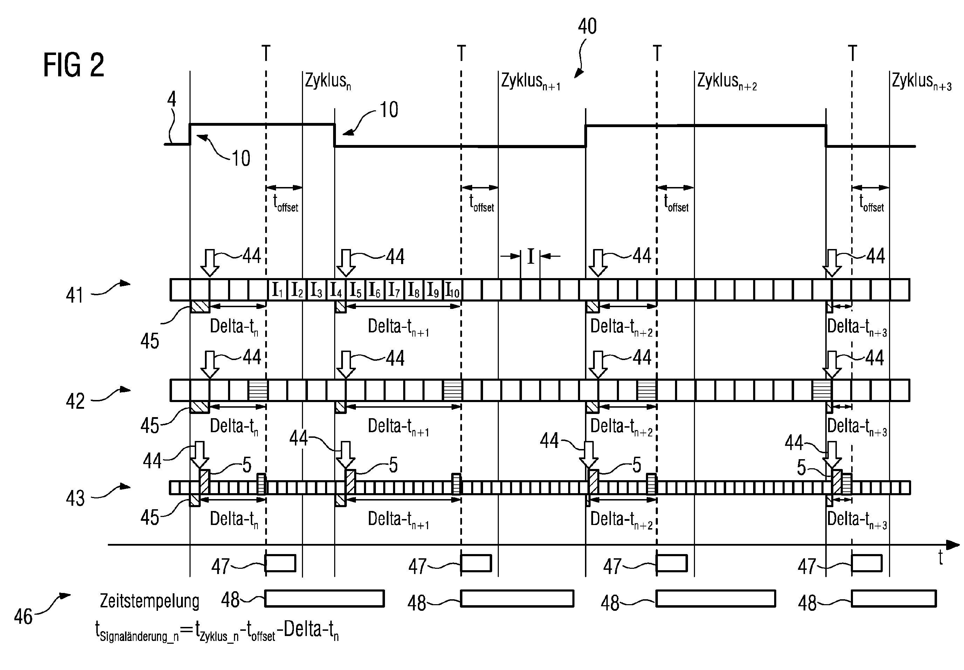

Weitere Ausgestaltungsvarianten, wie das Mittel 21 zur Zeitstempelung oder die Ein-/Ausgabebaugruppe 2 implementiert bzw. programmiert werden kann wird in der FIG 2 verdeutlicht.

Gemäß FIG 2 ist ein Ablaufdiagramm 40 dargestellt. Das Ablaufdiagramm 40 zeigt einen Signalverlauf des Signals 4. Der Signalverlauf weist dabei als Eingangssignaländerungen Flanken 10 auf, welche wechselseitig steigen oder fallen. Der Takt T ist als ein Synchronisationsimpuls mit einer senkrechten gestrichelten Linie durch das Diagramm dargestellt. Der Abstand zwischen zwei Synchronisationsimpulsen, also zwischen den beiden senkrechten gestrichelten Linien, ist jeweils 100 $\mu$s. Dargestellt ist ein Zyklus N, ein Zyklus N + 1 und ein Zyklus N + 2 sowie ein Zyklus N + 3.

In einer ersten Variante 41 zur Erfassung der Eingangssignaländerungen wird das Taktintervall im Zyklus N näher betrachtet. Durch den untersetzten Takt 24, also dem Oversampling in der Ein-/Ausgabebaugruppe 2, entstehen in dem Taktintervall von 100 $\mu$s mehrere 10 $\mu$s-Scheiben, nämlich ein erster 10 $\mu$s-Intervall $I_1$ bis zu einem zehnten 10 $\mu$s-Intervall $I_{10}$. Die Zeitscheiben von jeweils 10 $\mu$s sind dabei von 1 bis 10 durchnummeriert. Bezogen auf den übergeordneten Takt T mit einem Takt von 100 $\mu$s kann die Ein-/Ausgabebaugruppe 2 nun alle 10 $\mu$s einen neuen Wert erkennen und in einem internen Puffer ablegen (Oversampling). Durch ein Auslesen des kompletten Puffers, also aller 10 Werte, durch das Schnittstellenmodul 11, kann das Mittel 21 zur Zeitstempelung ein Delta-t wegen der Granularität der 10 $\mu$s-Scheiben den Zeitstempel bestimmen, in dem eine Signaländerung tatsächlich erfolgte. Damit ergibt sich eine weitaus höhere Genauigkeit, als es bei dem Stand der Technik der Fall ist. Das Erfassungsmoment 44 in dem eine Signaländerung erkannt wurde, ist jeweils als ein fetter schwarzer Pfeil dargestellt. Bezogen auf den Signalverlauf des Signales 4 mit der ansteigenden Flanke 10 führt von der steigenden Flanke eine gestrichelte senkrechte Linie runter zur ersten Variante 41. Genau an dieser Stelle findet aufgrund der steigenden Flanke 10 eine Signaländerung statt. Erkannt wurde diese Signaländerung aber erst nach dem Ablauf der 10 $\mu$s-Scheibe, damit ergibt sich ein Erfassungsfehler 45 und ein Delta-$t_n$.

Eine zweite Variante 42 wäre ebenfalls denkbar, bei dieser zweiten Variante 42 wird eine Anzahl, welcher der Häufigkeit K entspricht, an abgetasteten Werten in der Ein-/Ausgabebaugruppe 2 zwischengespeichert und in der Ein-/Ausgabebaugruppe 2 anhand der Reihe von Werten geprüft, bei welchen Wert eine Signaländerung eingetreten ist, wobei die Position des Wertes innerhalb der Reihe das Vielfache für die Berechnung des Zeitstempels 6 ergibt und dieses Vielfache wird an das Schnittstellenmodul 11 für das Mittel 21 zur Zeitstempelung übertragen.

Eine dritte Variante 43 sieht vor, dass in der Ein-/Ausgabebaugruppe 2 (siehe FIG 1) ein Flankendetektor 7 betrieben wird, welcher erkennt wann eine Signaländerung stattfindet und für jeden abgetasteten Wert in der Ein-/Ausgabebaugruppe 2 einen Zähler 8 hochzählt. Bei Erkennen einer Flanke 10 durch den Flankendetektor 7 wird der Zählerstand des Zählers 8 zu dem Vielfachen für die Berechnung des Zeitstempels 6. Dieses Vielfache bzw. der Zählerstand wird damit an das Schnittstellenmodul 11 über den Peripheriebus 12 übertragen und in dem Mittel 21 zur Zeitstempelungberechnung genutzt.

In der dritten Variante 43 stellt die Flankendetektion das Änderungsereignis 5 dar.

Am Ende eines jeden Zyklusses N findet eine Änderung der Datenübertragung 47 statt. Damit ergibt die unterste Zeile des Ablaufdiagrammes 40 einen Ablauf 46 im Schnittstellenmodul.

Eine mögliche Formel für eine Zeitstempelberechnung wäre:

$$t_{Signaländerung\_n} = t_{Zyklus\_n} - t_{offsett} - Delta\text{-}t_n$$

Dabei entspricht $t_{zyklus\_n}$ der Momentanzeit. Das $t_{offsett}$ könnte eine Laufzeitverzögerung auf dem Peripheriebus 12 sein.

**Patentansprüche**

1. Verfahren zur Erfassung von Eingangssignaländerungen an einem Eingang (3) einer Ein-/Ausgabebaugruppe (2), welche in einem Automatisierungssystem (1) betrieben wird, dabei wird

   - über die Ein-/Ausgabebaugruppe (2) ein Signal (4) abgetastet, wobei bei einer Signaländerung ein Änderungsereignis (5) und ein zu diesem Änderungsereignis (5) zugehöriger Zeitstempel (6) erzeugt wird, und
   - das Wertepaar Änderungsereignis (5) und Zeitstempel (6) in einer der Ein-/Ausgabebaugruppe (2) übergeordneten Automatisierungskomponente abgelegt wird,

   **dadurch gekennzeichnet, dass** die Ein-/Ausgabebaugruppe (2) und die übergeordnete Automatisierungskomponente taktsynchron mit einem Takt (T) zueinander betrieben werden, wobei der Zeitstempel (6) auf Grund des taktsynchronen Betriebes auf der übergeordneten Automatisierungskomponente zentral berechnet wird.

2. Verfahren nach Anspruch 1, wobei eine Addition einer Momentanzeit (t) zum Zeitpunkt des Taktes (T) und eines Vielfachen eines Abtastintervalls (I) in der Ein-/Ausgabebaugruppe (2) den Zeitstempel (6) ergibt.

3. Verfahren nach Anspruch 2, wobei in der Ein-/Ausgabebaugruppe (2) das Signal (4) mit einer Häufigkeit (k) abgetastet wird, wobei sich die Häufigkeit (k) aus der Division des Taktintervalls durch das Abtastintervall (I) ergibt.

4. Verfahren nach Anspruch 3, wobei eine Anzahl, welche der Häufigkeit (k) entspricht, an abgetasteten Werten in der Ein-/Ausgabebaugruppe (2) zwischen gespeichert und zur übergeordneten Automatisierungskomponente übertragen werden, wobei in der übergeordneten Automatisierungskomponente anhand der Reihe von Werten geprüft wird, bei welchem Wert eine Signaländerung eingetreten ist, wobei die Position des Wertes innerhalb der Reihe das Vielfache für die Berechnung des Zeitstempels (6) ergibt.

5. Verfahren nach Anspruch 3, wobei eine Anzahl, welcher der Häufigkeit (k) entspricht, an abgetasteten Werten in der Ein-/Ausgabebaugruppe (2) zwischen gespeichert und in der Ein-/Ausgabebaugruppe (2) anhand der Reihe von Werten geprüft wird, bei welchem Wert eine Signaländerung eingetreten ist, wobei die Position des Wertes innerhalb der Reihe das Vielfache für die Berechnung des Zeitstempels (6) ergibt und dieses an die übergeordnete Automatisierungskomponente übertragen wird.

6. Verfahren nach Anspruch 3, wobei in der Ein-/Ausgabebaugruppe (2) ein Flankendetektor (7) betrieben wird, welcher erkennt wann eine Signaländerung stattfindet und für jeden abgetasteten Wert in der Ein-/Ausgabebaugruppe (2) ein Zähler (8) hoch gezählt wird, wobei bei Erkennen einer Flanke (10) durch den Flankendetektor (7) ein Zählerstand des Zählers (8) das Vielfache für die Berechnung des Zeitstempels (6) ergibt und dieses an die übergeordnete Automatisierungskomponente übertragen wird.

7. Verfahren nach Anspruch 6, wobei die Flankendetektion in der Ein-/Ausgabebaugruppe (2) analog durchgeführt wird, wodurch das Abtastintervall (I) kleiner gewählt wird und die Genauigkeit der Zeitstempel Berechnung verbessert wird.

8. Verfahren nach einem der Ansprüche 1 bis 7, wobei in der übergeordneten Automatisierungskomponente eine Uhr (9) betrieben wird, welche die Momentanzeit (t) bereitstellt, dabei wird diese Uhr (9) mit anderen Automatisierungskomponenten in dem Automatisierungssystem (1) synchronisiert.

9. Verfahren nach einem der Ansprüche 1 bis 8, wobei die übergeordnete Automatisierungskomponente als ein Schnittstellenmodul (11) betrieben wird und die Ein-/Ausgabebaugruppe (2) über einen Peripheriebus (12) die erfassten Werte an das Schnittstellenmodul (11) sendet, wobei das Schnittstellenmodul (11) wiederum an einem Feldbus (13) betrieben wird, welcher an einem Automatisierungsgerät angeschossen wird.

FIG 1

EP 2 455 830 A1

FIG 2

$t_{Signaländerung\_n} = t_{Zyklus\_n} - t_{offset} - Delta\text{-}t_n$

Europäisches
Patentamt

European
Patent Office

Office européen
des brevets

**EUROPÄISCHER RECHERCHENBERICHT**

Nummer der Anmeldung

EP 10 19 2213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>Y | DE 10 2006 010748 A1 (PEPPERL & FUCHS [DE]) 13. September 2007 (2007-09-13)<br>* Absatz [0001] *<br>* Absatz [0006] *<br>* Absatz [0009] - Absatz [0011] *<br>* Absatz [0013] - Absatz [0014] *<br>* Absatz [0014] *<br>* Absatz [0017] - Absatz [0021] *<br>* Absatz [0026] - Absatz [0028] *<br>* Absatz [0033] - Absatz [0036] *<br>* Absatz [0038] - Absatz [0040] *<br>* Absatz [0043] - Absatz [0046] *<br>* Absatz [0050] *<br>* Absatz [0057] *<br>----- | 1,8,9<br><br>5 | INV.<br>G05B19/042<br>G05B19/05 |
| Y | DE 103 21 652 A1 (TENTACLION GMBH [DE]) 2. Dezember 2004 (2004-12-02)<br>* Absatz [0001] *<br>* Absatz [0013] *<br>* Absatz [0026] - Absatz [0027] *<br>* Absatz [0044] - Absatz [0049] *<br>* Absatz [0079] *<br>* Absatz [0082] - Absatz [0084] *<br>----- | 2-4,7,8 | |
| Y | EP 1 981 243 A1 (SENZA TECHNOLOGIES GMBH E [DE]) 15. Oktober 2008 (2008-10-15)<br>* Absatz [0001] *<br>* Absatz [0009] *<br>* Absatz [0011] *<br>* Absatz [0014] - Absatz [0016] *<br>* Absatz [0021] - Absatz [0022] *<br>* Absatz [0046] *<br>* Absatz [0050] - Absatz [0057] *<br>* Absatz [0061] - Absatz [0063] *<br>* Absatz [0066] - Absatz [0073] *<br>* Absatz [0077] *<br>* Absatz [0120] - Absatz [0122] *<br>-----<br>-/-- | 2-4,7-9 | RECHERCHIERTE SACHGEBIETE (IPC)<br><br>G05B<br>H04L<br>B60T |

Der vorliegende Recherchenbericht wurde für alle Patentansprüche erstellt

| Recherchenort | Abschlußdatum der Recherche | Prüfer |
|---|---|---|
| Den Haag | 17. Februar 2011 | Hristov, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 10 19 2213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 2 085 841 A1 (SICK AG [DE]) 5. August 2009 (2009-08-05)<br>* Absatz [0001] *<br>* Absatz [0006] *<br>* Absatz [0009] - Absatz [0011] *<br>* Absatz [0014] - Absatz [0018] *<br>* Absatz [0023] - Absatz [0024] *<br>* Absatz [0028] - Absatz [0041] *<br>* Absatz [0044] - Absatz [0047] *<br>* Absatz [0052] - Absatz [0053] *<br>* Absatz [0057] - Absatz [0059] *<br>* Absatz [0064] - Absatz [0068] *<br>* Ansprüche 1-6; Abbildungen 3,5,6 *<br>----- | 1,3,5,6,8<br><br>2,9 | |
| Y | EP 1 219 520 A2 (HANK JUERGEN DIPL ING [DE] HANK JUERGEN DIPL-ING [DE]) 3. Juli 2002 (2002-07-03)<br>* Absatz [0001] *<br>* Absatz [0007] - Absatz [0010] *<br>* Absatz [0013] - Absatz [0016] *<br>* Absatz [0028] *<br>----- | 1-4 | |
| Y | EP 1 184 755 A2 (SIEMENS AG [DE]) 6. März 2002 (2002-03-06)<br>* Absatz [0002] *<br>* Absatz [0006] *<br>* Absatz [0008] - Absatz [0009] *<br>* Absatz [0011] - Absatz [0012] *<br>* Absatz [0014] - Absatz [0027] *<br>----- | 1,5,9 | **RECHERCHIERTE SACHGEBIETE (IPC)** |
| A | DE 10 2004 050386 A1 (SIEMENS AG [DE]) 4. Mai 2006 (2006-05-04)<br>* Absatz [0001] - Absatz [0002] *<br>* Absatz [0010] - Absatz [0020] *<br>* Absatz [0029] - Absatz [0036] *<br>* Absatz [0040] *<br>----- | 1-9 | |

Der vorliegende Recherchenbericht wurde für alle Patentansprüche erstellt

| Recherchenort | Abschlußdatum der Recherche | Prüfer |
|---|---|---|
| Den Haag | 17. Februar 2011 | Hristov, Stefan |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 19 2213

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2011

| Im Recherchenbericht angeführtes Patentdokument | Datum der Veröffentlichung | Mitglied(er) der Patentfamilie | | Datum der Veröffentlichung |
|---|---|---|---|---|
| DE 102006010748 A1 | 13-09-2007 | WO | 2007101658 A1 | 13-09-2007 |
| DE 10321652 A1 | 02-12-2004 | WO | 2004102293 A1 | 25-11-2004 |
| | | EP | 1625451 A1 | 15-02-2006 |
| EP 1981243 A1 | 15-10-2008 | KEINE | | |
| EP 2085841 A1 | 05-08-2009 | AT | 484780 T | 15-10-2010 |
| | | DK | 2085841 T3 | 15-11-2010 |
| | | EP | 2085848 A1 | 05-08-2009 |
| EP 1219520 A2 | 03-07-2002 | AT | 318742 T | 15-03-2006 |
| | | DE | 10064296 A1 | 31-10-2002 |
| | | DK | 1219520 T3 | 10-04-2006 |
| | | ES | 2259001 T3 | 16-09-2006 |
| EP 1184755 A2 | 06-03-2002 | AT | 389906 T | 15-04-2008 |
| | | DE | 10040468 A1 | 07-03-2002 |
| | | ES | 2299453 T3 | 01-06-2008 |
| DE 102004050386 A1 | 04-05-2006 | WO | 2006042799 A2 | 27-04-2006 |
| | | US | 2008154545 A1 | 26-06-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006010748 A1